(19) **Europäisches Patentamt**

**European Patent Office**

**Office européen des brevets**

(11) **EP 1 598 380 A1**

(12) **EUROPÄISCHE PATENTANMELDUNG**

(43) Veröffentlichungstag:
**23.11.2005 Patentblatt 2005/47**

(51) Int Cl.7: **C08F 10/10, C08F 4/12**

(21) Anmeldenummer: **04011971.1**

(22) Anmeldetag: **19.05.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(71) Anmelder: **BASF Aktiengesellschaft
67056 Ludwigshafen (DE)**

(72) Erfinder: **Die Erfindernennung liegt noch nicht
vor**

(74) Vertreter: **Reitstötter - Kinzebach
Patentanwälte
Sternwartstrasse 4
81679 München (DE)**

(54) **Polymerisation von Isobuten in Gegenwart von Komplexen von Donor mit Fluor-haltigen Säuren**

(57) Beschrieben wird ein Verfahren zur Herstellung von im Wesentlichen einfach ethylenisch ungesättigten Isobutenpolymeren, worin die Summe der Anteile der Moleküle mit $\alpha$- und der Moleküle mit $\beta$-ständiger Doppelbindung wenigstens 75 Mol-% beträgt, durch Polymerisation von Isobuten in flüssiger Phase in Gegenwart eines gelösten oder dispergierten Katalysator-Komplexes, der (i) einen Elektronendonor und (ii) eine Verbindung der allgemeinen Formel I umfasst

$$H_a \, Me_b \, [MF_x]_c \qquad (I)$$

worin Me für ein Metall der Oxidationsstufe m steht, M für ein unter den Elementen der Gruppe 2, 3, 4, 5, 10, 11, 13, 14 oder 15 des Periodensystems der Elemente gemäß IUPAC-Notation ausgewähltes Element der Oxidationszahl n steht, a für eine ganze Zahl $\geq 1$ steht, b für eine ganze Zahl $\geq 0$ steht, x für eine ganze Zahl $\geq 2$ steht, c für $[(a+mb)/(x-n)]$ steht. Ein bevorzugter Katalysator ist $HBF_4 \cdot O(CH_3)_2$. Das Verfahren liefert Isobutenpolymere mit niedrigem Fluorgehalt, auch beim Einsatz technischer $C_4$-Kohlenwasserstoffschnitte als Isobutenquelle.

**EP 1 598 380 A1**

**Beschreibung**

Die Erfindung betrifft ein Verfahren zur Polymerisation von Isobuten in flüssiger Phase in Gegenwart bestimmter Fluorelementsäure-Donor-Komplexe.

Die Polymerisation von Isobuten zu im Wesentlichen einfach ethylenisch ungesättigten Polyisobutenen ist bekannt. Die Doppelbindung kann in dem Makromolekül verschiedene Positionen einnehmen, die sich in ihrer Reaktivität unterscheiden. Die so genannten hochreaktiven Polyisobutene sind begehrte Zwischenprodukte zur Herstellung von Additiven für Schmier- und Kraftstoffe verwendet. Diese haben einen hohen Anteil an Molekülen, in denen die Doppelbindung α-ständig, d. h. in Form einer terminalen Gruppe der Formel -[-C(CH$_3$)=CH$_2$], oder β-ständig, d. h. in Form einer terminalen Gruppe der Formel -[-CH=C(CH$_3$)$_2$], angeordnet ist.

Hochreaktive Polyisobutene können z. B. durch Bortrifluorid-katalysierte Polymerisation von Isobuten oder Isobuten-haltiger Kohlenwasserstoffströme erhalten werden. Bei der Katalyse mit Bortrifluorid kommt es jedoch als Nebenreaktion zur Anlagerung von Fluor an das Polyisobuten bzw. zur Bildung nieder- und mittelmolekularer fluorhaltiger Nebenprodukte, wie tert-Butylfluorid, Diisobutylfluorid oder Triisobutylfluorid, die das Polyisobuten kontaminieren. Wenn als Isobutenquelle technische C$_4$-Kohlenwasserstoffströme, wie das so genannte Raffinat I, verwendet werden, die neben Isobuten größere Mengen linearer Butene, insbesondere 1-Buten enthalten, werden signifikant höhere Fluorgehalte beobachtet.

Die GB 486,161 beschreibt ein Verfahren zur Herstellung hochmolekularer Produkte aus Isobuten und mehrfach ungesättigten Olefinen. Als Katalysator ist unter anderem BF$_3$HF genannt. Die Patentschrift enthält keine weiteren ausführbaren Angaben zur Durchführung einer Polymerisationsreaktion unter Verwendung dieses Katalysators; sie befasst sich nicht mit hochreaktiven Polyisobutenen.

Die EP 322 241 beschreibt ein Verfahren zur Herstellung hochreaktiver Polyisobutene, bei dem man Isobuten in Gegenwart von Bortrifluorid und eines Cokatalysators polymerisiert und das Polymierisationsprodukt unverzüglich quencht. Als Cokatalysator soll z. B. Fluorwasserstoff geeignet sein.

Die EP 337 737 offenbart ein Verfahren zur Herstellung von Poly-n-butenen, bei dem man 1-Buten, cis- und/oder trans-2-Buten in Gegenwart von Bortrifluorid und Fluorwasserstoff polymerisiert.

Aus der WO 89/01001 geht ein Verfahren zur Oligomerisierung niederer Alkene in Gegenwart eines Katalysatorsystems hervor, das Bortrifluorid und eine Säure, z. B. Phosphorsäure, umfasst.

Die WO 95/26814 beschreibt geträgerte Lewissäure-Katalysatoren, die sich zur Katalyse von Kohlenwasserstoffumwandlungen wie Olefinpolymerisationen eignen sollen und bestimmte Salze von Supersäuren enthalten. Nachteilig ist die aufwändige Katalysatorherstellung; außerdem müssen Vorkehrungen getroffen werden, um den Katalysator gleichmäßig im Reaktionsgemisch suspendiert zu halten.

Der Erfindung liegt die Aufgabe zu Grunde, ein Verfahren anzugeben, das die Herstellung von hochreaktiven Isobutenpolymeren mit niedrigem Fluorgehalt erlaubt.

Diese Aufgabe wird gelöst durch ein Verfahren zur Herstellung von im Wesentlichen einfach ethylenisch ungesättigten Isobutenpolymeren, worin die Summe der Anteile der Moleküle mit α- und der Moleküle mit β-ständiger Doppelbindung wenigstens 75 Mol-% beträgt, durch Polymerisation von Isobuten in flüssiger Phase in Gegenwart eines gelösten oder dispergierten Katalysator-Komplexes, der (i) einen Elektronendonor und (ii) eine Verbindung der allgemeinen Formel I umfasst

$$H_a \, Me_b \, [MF_x]_c \qquad\qquad (I)$$

worin

Me   für ein Metall der Oxidationsstufe m steht,

M   für ein unter den Elementen der Gruppe 2, 3, 4, 5, 10, 11, 13, 14 oder 15 des Periodensystems der Elemente gemäß IUPAC-Notation ausgewähltes Element der Oxidationszahl n steht,

a   für eine ganze Zahl $\geq$ 1 steht,

b   für eine ganze Zahl $\geq$ 0 steht,

x   für eine ganze Zahl $\geq$ 2 steht,

c   für $[(a+mb)/(x-n)]$ steht.

Unter "Isobutenpolymer" werden Polymere verstanden, die zu wenigstens 50 Gew.-% aus Monomereinheiten aufgebaut sind, die sich von Isobuten ableiten. Bevorzugte Isobutenpolymere umfassen wenigstens 80 Gew.%, vorzugsweise wenigstens 90 Gew.-% und insbesondere wenigstens 95 Gew.-%, von Isobuten abgeleitete Monomereinheiten.

Soweit vorhanden, leiten sich die von Isobuten verschiedenen Monomereinheiten von ethylenisch ungesättigten Monomeren ab, die mit Isobuten unter Bedingungen der kationischen Polymerisation copolymerisierbar sind. Hierzu zählen insbesondere Vinylaromaten wie Styrol, $C_1$-$C_4$-Alkylstyrole wie 2-, 3- und 4-Methylstyrol, sowie 4-tert-Butylstyrol, Isoolefine mit 5 bis 10 Kohlenstoffatomen wie 2-Methylbuten-1, 2-Methylpenten-1, 2-Methylhexen-1, 2-Ethylpenten-1, 2-Ethylhexen-1 und 2-Propylhepten-1, und Diene, wie 1,3-Butadien und Isopren. Daneben kommen auch Olefine in Betracht, die eine Silylgruppe aufweisen wie 1-Trimethoxysilylethen, 1-(Trimethoxysilyl)propen, 1-(Trimethoxysilyl)-2-methylpropen-2, 1-[Tri(methoxyethoxy)si-lyl]ethen, 1-[Tri(methoxyethoxy)silyl]propen, und 1-[Tri(meth-oxyethoxy)silyl]-2-methylpropen-2.

Als Isobutenquellen für das erfindungsgemäße Verfahren eignen sich sowohl Isobuten selbst als auch Isobuten-haltige $C_4$-Kohlenwasserstoffströme, beispielsweise $C_4$-Raffinate, $C_4$-Schnitte aus der Isobutan-Dehydrierung, $C_4$-Schnitte aus Steamcrackern, FCC-Crackern (Fluid Catalysed Cracking), die vorzugsweise weitgehend vom darin enthaltenen 1,3-Butadien befreit sind. Geeignete $C_4$-Kohlenwasserstoffströme enthalten in der Regel weniger als 1000 ppm, vorzugsweise weniger als 200 ppm Butadien. Typischerweise liegt die Summe der Anteile von Isobutan, Butan, 1-Buten, cis- und trans-2-Buten in den $C_4$-Kohlenwasserstoffströmen im Bereich von 20 bis 90 Gew.-%, meist 40 bis 70 Gew.-%, wobei 10 bis 70 Gew.-% (bezogen auf das Gesamtgewicht des Stroms) auf die von Isobuten verschiedenen Butene entfallen können. Derartige $C_4$-Kohlenwasserstoffströme sind bevorzugte Einsatzmaterialien für das erfindungsgemäße Verfahren. Als Isobutenquelle eignet sich aber auch ein Gemisch von reinem Isobuten mit einem nicht-olefinischen Verdünnungsmittel.

Die Polymerisation erfolgt in flüssiger Phase, d. h. bei Druck- und Temperaturbedingungen, bei denen das Reaktionsgemisch zumindest teilweise in kondensierter flüssiger Form vorliegt. Üblicherweise umfasst das Reaktionsgemisch ein Verdünnungsmittels oder Verdünnungsmittelgemisch, das gegenüber den eingesetzten Reagenzien im Wesentlichen inert ist. Geeignete Verdünnungsmittel sind gesättigte aliphatische oder cycloaliphatische Kohlenwasserstoffe, wie Butan, Pentan, Hexan, Heptan, Oktan, Cyclopentan, Cyclohexan, Methylcyclohexan; aromatische Kohlenwasserstoffe, wie Toluol oder Ethylbenzol; ungesättigte Kohlenwasserstoffe, wie Ethylen, 1-Buten, 2-Buten, halogenierte Kohlenwasserstoffe wie Methylchlorid, Dichlormethan oder Trichlormethan sowie Mischungen der vorgenannten Verbindungen. Vorzugsweise werden die Lösungsmittel vor ihrem Einsatz im erfindungsgemäßen Verfahren von sauerstoffhaltigen Verunreinigungen wie Kohlenmonoxid, Wasser, Aceton, Carbonsäuren oder sauren Verunreinigungen wie Mineralsäuren befreit, beispielsweise durch Adsorption an festen Adsorbentien, wie Aktivkohle, Molekularsieben oder Ionenaustauschern. Bei Einsatz von $C_4$-Schnitten übernehmen die von Isobuten verschiedenen Kohlenwasserstoffe die Rolle eines im Wesentlichen inerten Verdünnungsmittels.

Im erfindungsgemäßen Verfahren wird ein ungeträgerter Katalysator verwendet, der im flüssigen Reaktionsgemisch gelöst oder dispergiert bzw. emulgiert ist. Der Katalysator umfasst eine Fluorelementsäure der Formel $H_a[MF_x]$, die gegebenenfalls teilneutralisiert ist, und einen Elektronendonor.

Das Zentralatom M der Fluorelementsäure steht für ein unter den Elementen der Gruppe 2, 3, 4, 5, 10, 11, 13, 14 oder 15 des Periodensystems der Elemente gemäß IUPAC-Notation ausgewähltes Element, vorzugsweise für Be, B, Al, Si, P, Ti, V, Ga, Ge, As, Y, Zr, Nb, In, Sn oder Sb, insbesondere für Be, B, Al, Si oder P und besonders bevorzugt für B.

Die Natur des Metalls Me ist nicht kritisch. Me steht vorzugsweise für ein Alkalimetall, wie Li, Na, K, ein Erdalkalimetall, wie Ca, oder für Ag oder Au.

In bevorzugten Ausführungsformen ist $H_aMe_b[MF_x]_c$ unter $H_2BeF4$, $HBF_4$, $HPF_6$, $H_2SiF_6$, $HMeSiF_6$, $HAlF_4$, $H_3AlF_6$ ausgewählt, worin Me für Li, Na oder K steht.

Der Elektronendonor (im Folgenden auch als "Donor" bezeichnet) enthält wenigstens ein Heteroatom mit einem freien Elektronenpaar, beispielsweise ein Sauerstoff-, Stickstoff- Schwefel- und/oder Phosphoratom, vorzugsweise ein Sauerstoff-, Stickstoff-und/oder Schwefelatom, insbesondere ein Sauerstoff- und/oder Stickstoffatom

In bestimmten Ausführungsformen weist der Donor keine aktiven Wasserstoffatome auf, d. h. insbesondere keine Wasserstoffatome, die an ein Sauerstoff- oder Stickstoffatom gebunden sind.

Geeignete sauerstoffhaltige Donoren sind Alkohole, Ketone, Ether, Carbonsäuren und/oder Carbonsäureester.

Als Alkohole eignen sich beispielsweise $C_1$-$C_{13}$-Alkanole und $C_5$-$C_6$-Cycloalkanole oder $C_2$-$C_{10}$-Alkandiole, wie Methanol, Ethanol, n-Propanol, Isopropanol, 2-Butanol, t-Butanol, 2-Ethylhexanol; Cyclohexylalkohol; Ethylenglykol oder Propylenglykol.

Geeignete Ketone sind unter anderem Aceton, Ethylmethylketon, Acetoaceton oder Acetophenon.

Als Ether kommen $C_2$-$C_{20}$-Dialkylether; cyclische Ether, insbesondere 5- oder 6-gliedrige cyclische Ether mit einem oder zwei Sauerstoffatomen im Ring, wie Tetrahydrofuran oder Dioxan, in Betracht.

Geeignete Carbonsäuren bzw. -ester sind Essigsäure, Propionsäure, Buttersäure, Capronsäure, Benzoesäure bzw. Ester davon, z. B. die Methyl- oder Ethylester.

Weiter eignen sich stickstoffhaltige Donoren wie Ammoniak, organische Amine bzw. Polyamine oder Hydroxylamin. Nitrilverbindungen oder Amide.

Beispielhafte organische Amine sind Methylamin, Dimethylamin, Ethylamin, Diethylamin, Triethylamin, Propylamin, Isopropylamine, Diisopropylamin, 2-Ethylhexylamin, Diisobutylamin, sec-Butylamin, tert-Butylamin, Tri-n-octylamin, Di-2-ethylhexylamin, Allylamin, Diallylamin, Triallylamin, Anilin, Benzylamin, Ethylendiamin, Hexamethylendiamin, Tretramethylethylendiamin, Diethylentriamin, Triethylentetramin und Tetraethylpentamin, 3-(Methylamino)propylamin, 3-(Dimethylamino)propylamin und 3-(Dibutylamino)propylamin; Oxyamine wie 3-Methoxypropylamin, 3-Ethoxypropylamin, und 3-(2-Ethylhexyloxy)propylamin; Hydroxylamine wie N-Methylethanolamin, N,N-Dimethylethanolamin, N,N-Diethylethanolamin, N,N-Dibutylethanolamin, N-Methyldiethanolamin, N-(2-Aminoethyl)ethanolamin und 3-Amino-1-propanol; und Pyridine wie Pyridine und 4-Aminopyridin. Ferner kann man Aminosäuren wie β-Alanin verwenden. Die Aufzählung soll nicht abschließend sein.

Beispielhafte Nitrilverbindungen sind Acetonitril, Propionitril und Benzonitril.

Beispielhafte Amide sind Formamid, Dimethylformamid, Acetamid, Dimethylacetamid, Propionamid, Benzamid, N,N-Dimethylbenzamid.

Beispielhafte schwefelhaltige Donoren sind Thiole, wie Dodecylmercaptan, Thioether, Dialkyldisulfide, oder Sulfoxide, wie Dimethylsulfoxid, Sulfone, Sulfonsäureester, wie Methylsulfonsäuremethylester, Dialkylsulfate, wie Dimethylsulfat.

Geeignete phosphorhaltige Donoren sind Phosphane, wie Triphenylphosphin, Phosphanoxide, wie Triphenylphosphanoxid, Trialkyl-, Triaryl- oder gemischte Aryl/Alkylphosphite, Trialkyl-, Triaryl- oder gemischte Aryl-/Alkylphosphate; Verbindungen der Formel $PR_{3-x}(OR)_x$ oder $P(O)R_{3-x}(OR)_x$ (worin R für einen Alkyl- oder Arylrest steht und x = 1 oder 2); Phosphorsäureamide, wie Hexamethylphosphorsäuretriamid.

Weitere geeignete Liganden sind polymere Liganden, wie Polyvinylakohol, Polyvinylamin, Polyether, wie Polyalkylenglykole, z. B. Polyethylenglykole, Polyalkylenglykolmono- oder -dialkylether, Polyalkylenamine, wie Polyethylenamine, Polyalkylenimine, z. B. Polyethylenimine mit Molmassen von vorzugsweise 300 bis 20000, insbesondere von 300 bis 5000, Polyamide, wie Nylon 6 oder Nylon 6,6, und aliphatische oder aromatische Polyketone.

Im Allgemeinen ist der Ligand unter Alkoholen, Ketonen, Ethern, Aminen, Nitrilen, Amiden und Sulfoxiden ausgewählt.

In besonders bevorzugten Ausführungsformen umfasst der Donor einen ersten Donor $L^1$ und einen zweiten Donor $L^2$, wobei $L^1$ ein Ether ist und $L^2$ unter Alkoholen, Carbonsäuren, Carbonsäureestern, Aminen, Nitrilen, Amiden und Sulfoxiden ausgewählt ist. Bevorzugte Donoren $L^1$ sind unter Ethern der Formel R-O-R' ausgewählt, worin R und R' unabhängig voneinander für Methyl, Ethyl, n-Propyl, i-Propyl, n-Butyl, i-Butyl, s-Butyl oder tert-Butyl stehen. Vorzugsweise steht wenigstens einer der Reste R und R' für Methyl.

In besonders bevorzugten Ausführungsformen umfasst der Donor einen ersten Donor $L^1$ und einen zweiten Donor $L^2$, wobei $L^1$ ein von einem tertiären Alkylether verschiedener Ether ist und $L^2$ unter Alkoholen, tertiären Alkylethern, Carbonsäuren, Carbonsäureestern, Aminen, Nitrilen, Amiden und Sulfoxiden ausgewählt ist. Bevorzugte Donoren $L^1$ sind unter Ethern der Formel R-O-R' ausgewählt, worin R und R' unabhängig voneinander für Methyl, Ethyl, n-Propyl, i-Propyl, n-Butyl, i-Butyl oder s-Butyl stehen. Vorzugsweise steht wenigstens einer der Reste R und R' für Methyl; Dimethylether ist besonders bevorzugt. Bevorzugte Donoren $L^2$ sind Methyl-tert-butylether, Diisopropylether, Methanol, Dimethylformamid, Dimethylsulfoxid.

In bevorzugten Ausführungsformen liegt der Donor $L^1$ in wenigstens stöchiometrischer Menge, z. B. in einer Menge von 0,8 bis 1,2 Moläquivalenten, bezogen auf das Element M, vor. Der Donor $L^2$ liegt vorzugsweise in einer Menge von bis zu 0,4, vorzugsweise 0,001 bis 0,15 Moläquivalenten, bezogen auf das Element M, vor.

Ein besonders bevorzugter Katalysator umfasst $HBF_4 \cdot O(CH_3)_2$, gegebenenfalls in Kombination mit einem weiteren Elektronendonor, insbesondere den vorstehend als $L^2$ beschriebenen.

Die Konzentration des Katalysators im Reaktor beträgt bei der Herstellung von Isobutenpolymeren mit zahlenmittleren Molekulargewichten im Bereich von 200 bis 5000 beispielsweise 0,01 bis 3 Gew.-%, bezogen auf die flüssige Reaktionsphase; bei der Herstellung von Isobutenpolymeren mit zahlenmittleren Molekulargewichten im Bereich von 5000 bis 50000 beispielsweise 0,001 bis 0,01 Gew.-%.

Die erfindungsgemäß verwendeten Katalysatoren können auf beliebige zweckmäßige Weise hergestellt werden. Sie können vorgefertigt oder in situ im Polymerisationsgemisch erzeugt werden. Die Katalysator-Komplexe können in separaten Reaktoren vor ihrem Einsatz im erfindungsgemäßen Verfahren vorgebildet werden, nach ihrer Bildung zwischengelagert und je nach Bedarf in die Polymerisationsapparatur eindosiert werden. Diese Variante ist bevorzugt. Zur vorab-Herstellung des Katalysators komplexiert man eine Fluorelementsäure mit dem ausgewählten Donor oder löst die Fluorelementsäure darin. Beispielsweise kann man Tetrafluorborsäure mit Dimethylether umsetzen. Die Fluorelementsäure kann ihrerseits durch Umsetzung einer Fluorverbindung der Formel $MF_{x-1}$ mit Fluorwasserstoff HF erhalten werden, z. B. durch Umsetzung von $BF_3$ mit HF. Alternativ setzt man einen Komplex, der aus der Fluorverbindung und einem Donor besteht, mit Fluorwasserstoff um. So kann man beispielsweise ein Bortrifluoridetherat, z. B. Bortrifluorid-dimethyletherat oder Bortrfluorid-diethyletherat, mit Fluorwasserstoff umsetzen, wobei der Katalysator erhalten wird. Die Umsetzungen erfolgen vorzugsweise in Substanz oder alternativ in einem inerten Lösungsmittel wie den vorstehend genannten Verdünnungsmittel. Der Fluorwasserstoff kann gasförmig oder in Form einer Lösung in einem inerten Lösungsmittel eingesetzt werden.

Eine andere Variante besteht darin, die Katalysator-Komplexe in situ in der Polymerisationsapparatur zu erzeugen. Bei dieser Verfahrensweise wird entweder

(i) der Donor und getrennt davon die Säure $H_aMF_x$, oder

(ii) die Fluorverbindung $MF_{x-1}$ gemeinsam mit dem Donor und getrennt davon Fluorwasserstoff; oder

(iii) die Fluorverbindung $MF_{x-1}$, der Donor und Fluorwasserstoff in getrennten Strömen in die Polymerisationsapparatur eingespeist und im Reaktionsgemisch gelöst bzw. dispergiert. Hierbei setzen sich die Komponenten zum katalytisch aktiven Komplex um. Die Komponenten werden zweckmäßigerweise in einem geeigneten Lösungsmittel gelöst und in Form einer Lösung in das Reaktionsgemisch eingespeist. Anstelle eines zusätzlichen Lösungsmittels kann bei der in situ-Erzeugung des Katalysator-Komplexes Isobuten oder die Reaktionsmischung aus nicht umgesetztem Isobuten und Polyisobuten als Lösungsmittel fungieren.

Wenn der Katalysatorkomplex mehr als einen Donor umfasst, können die Donoren vorgemischt werden oder getrennt voneinander in verschiedenen Stadien der Katalysatorbildung zugegeben werden. Es ist bisweilen zweckmäßig, einen vorgebildeten Komplex, der eine Fluorelementsäure und einen ersten Donor umfasst, und einen zweiten Donor in getrennten Strömen zum Polymerisationsgemisch zu dosieren.

Der katalytisch aktive Komplex wird im Reaktionsgemisch fein dispergiert. Die Feindispergierung erfolgt durch geeignete Vorrichtungen, wie Rührer, vorzugsweise Hochgeschwindigkeitsrührer, statische Mischer, Blenden zur Querschnittsverringerung, Mischpumpen und dergleichen.

Man kann die erfindungsgemäße Polymerisation auch in Gegenwart eines Fluoridfängers durchführen. Als Fluoridfänger eignen sich siliziumorganische Verbindungen, die über wenigstens eine Si-O-, Si-C-, Si-H-Bindung oder eine Bindung von einem Siliziumatom zu einem von Fluor verschiedenen Halogenatom verfügen. Geeignete siliziumorganische Verbindungen sind z. B. Phenyltrimethylsilan, Phenyltrichlorsilan oder Trimethylsilan.

Bevorzugte derartige siliziumorganische Verbindungen sind solche der allgemeinen Formel II:

$$R_n^a Si(OR^b)_{4-n} \qquad (II)$$

worin n für 1, 2 oder 3 steht,

$R^a$ gleich oder verschieden sein können und unabhängig voneinander $C_1$-$C_{20}$-Alkyl, $C_5$-$C_7$-Cycloalkyl, Aryl oder Aryl-$C_1$-$C_4$-alkyl bedeuten, wobei die drei letztgenannten Reste auch eine oder mehrere $C_1$-$C_{10}$-Alkylgruppen als Substituenten aufweisen können, und

$R^b$ gleich oder verschieden sind und $C_1$-$C_{20}$-Alkyl bedeuten oder für den Fall, dass n für 1 oder 2 steht, zwei Reste $R^b$ gemeinsam für Alkylen stehen können.

In der Formel II steht n vorzugsweise für 1 oder 2. $R^a$ bedeutet vorzugsweise eine $C_1$-$C_8$-Alkylgruppe, und insbesondere eine verzweigte oder über ein sekundäres C-Atom gebundene Alkylgruppe, wie Isopropyl, Isobutyl, 2-Butyl, oder eine 5-, 6- oder 7-gliedrige Cycloalkylgruppe, oder eine Arylgruppe. Die Variable $R^b$ steht vorzugsweise für eine $C_1$-$C_4$-Alkylgruppe oder für einen Phenyl-, Tolyl- oder Benzylrest.

Beispiele für derartige bevorzugte Verbindungen sind Dimethoxydiisopropylsilan, Dimethoxyisobutylisopropylsilan, Dimethoxydi-isobutylsilan, Dimethoxydicyclopentylsilan, Dimethoxyisobutyl-2-butylsilan, Diethoxyisobutylisopropylsilan, Triethoxytoluylsilan, Triethoxybenzylsilan und Triethoxyphenylsilan.

Die Polymerisation kann diskontinuierlich oder vorzugsweise kontinuierlich erfolgen. Bei einem kontinuierlichen Verfahren wird kontinuierlich ein Teil der im Polymerisationsreaktor entstandenen Reaktionsmischung ausgetragen. Eine dem Austrag entsprechende Menge an Einsatzmaterialien wird dem Polymerisationsreaktor kontinuierlich zugeführt. Das Umlauf/Zulauf-Verhältnis, d. h. das Verhältnis der im Polymerisationsreaktor befindlichen Stoffmenge zu der Menge, die ausgetragen wird, liegt im Allgemeinen im Bereich von 1 000:1 bis 1:1, bevorzugt im Bereich von 500:1 bis 5:1 und insbesondere im Bereich von 20:1 bis 100:1 Vol./Vol. Die mittlere Verweildauer der zu polymerisierenden Monomere im Polymerisationsreaktor kann 5 Sekunden bis mehrere Stunden betragen. Verweilzeiten von 1 bis 30 min, insbesondere 2 bis 20 min sind bevorzugt. Die Polymerisation erfolgt in den für die kontinuierliche Polymerisation üblichen Reaktoren, wie Rührkesseln, Rohr-, Rohrbündel- und Schlaufenreaktoren, wobei Schlaufenreaktoren, d. h. Rohr(bündel)reaktoren mit Umlauf und turbulenter Strömung oder Einbauten wie statischen Mischern, d. h. mit Rührkesselcharakteristik, bevorzugt sind. Besonders günstig sind dabei Schlaufenreaktoren mit Rohrquerschnitten, die zu turbulenter Strömung führen. Es können hintereinander geschaltete Reaktoren verwendet werden, insbesondere Anordnungen aus Haupt- und Nachreaktor.

Die Polymerisation erfolgt im Allgemeinen bei einer Temperatur im Bereich von -60 °C bis +40 °C, vorzugsweise weniger als 0 °C, besonders bevorzugt im Bereich von -5 °C bis -40 °C und speziell im Bereich von -10 °C bis -30 °C. Die Polymerisationswärme wird entsprechend mit Hilfe einer Kühlvorrichtung abgeführt. Diese kann beispielsweise mit flüssigem Ammoniak als Kühlmittel betrieben werden.

Eine andere Möglichkeit, die Polymerisationswärme abzuleiten, ist die Siedekühlung. Dabei wird die freiwerdende Wärme durch Verdampfen leichtflüchtiger Bestandteile des Reaktionsgemisches, z. B. eines leichtflüchtigen Lösungsmittels, abgeführt. Verfahrenstechnisch besonders empfehlenswert ist es, Verdünnungsmittel einzusetzen, die im gewünschten Temperaturbereich sieden.

Vorzugsweise arbeitet man im erfindungsgemäßen Polymerisationsverfahren unter isothermen Bedingungen, d.h. die Temperatur der flüssigen Reaktionsmischung im Polymerisationsreaktor hat einen stationären Wert und ändert sich während des Betriebs des Reaktors nicht oder nur in geringem Maße.

Bei der kontinuierlichen Polymerisation von Isobuten beträgt die stationäre Konzentration des Isobutens in der flüssigen Reaktionsphase 0,2 bis 50 Gew.%, vorzugsweise 0,5 bis 20 Gew.-% und insbesondere 1 bis 10 Gew.-%, bezogen auf die flüssige Reaktionsphase.

Eine weitergehende Abreicherung von Isobuten kann in einem nachgeschalteten Reaktor erreicht werden. Im Allgemeinen ist einem rückvermischten Hauptreaktor ein Nachreaktor nachgeschaltet, der durch angenäherte Propfenströmungscharakteristik gekennzeichnet ist. Eine bevorzugte Arbeitsweise für eine mehrstufige Methode ist in der WO 96/40808 beschrieben. Die Polymerisation erfolgt gemäß dieser Methode in ihrer einfachsten Ausgestaltung in zwei Polymerisationsstufen. Der Austrag aus der ersten Polymerisationsstufe wird vorzugsweise unmittelbar in die zweite Polymerisationsstufe geleitet. Hier wird die Polymerisation ohne Zusatz frischen Isobutens fortgesetzt. Beispielsweise ist es möglich, in der ersten Polymerisationsstufe einen Isobutenumsatz von 5 bis 98 vorzugsweise von 50 bis 95%, insbesondere von 50 bis 90 %, einzustellen und in der zweiten Stufe die Polymerisation dann fortzuführen. Die zweite Polymerisationsstufe wird dabei vorteilhaft bei gleicher oder einer niedrigeren Polymerisationstemperatur betrieben als die erste Polymerisationsstufe, in der Regel beträgt die Temperaturdifferenz dabei 0 bis20 °C, vorzugsweise 0 bis10 °C.

Im allgemeinen wird in der zweiten Polymerisationsstufe der Isobutenumsatz so eingestellt, dass der Gesamtumsatz des Isobutens in der ersten und zweiten Polymerisationsstufe im allgemeinen bei 80 bis 100 %, vorzugsweise bei 90 bis 100%, insbesondere bei 95 bis 100 %, liegt.

Falls das Polymerisationsgemisch in der zweiten Stufe noch mehr als 2Gew.-% Isobuten, bezogen auf das in die erste Stufe eingespeiste Isobuten,enthält, kann alternativ das nicht umgesetzte Isobuten gemeinsam mit dem Polymerisationsaustrag aus der zweiten Polymerisationsstufe ohne weitere Aufarbeitung einer dritten Polymerisationsstufe zugeführt werden und dort bis zu einem Isobuten-Gehalt von unter 2 Gew.-% weiterpolymerisiert werden.

Obgleich die Anwendung einer zweiten und dritten Polvmerisationsstufe auch beim Einsatz von Reinisobuten von Vorteil ist, erweist sie sich als besonders vorteilhaft, wenn Isobuten-haltige $C_4$-Kohlenwasserstoffstrome, wie $C_4$-Raffiate oder $C_4$-Schnitte als Einsatzstoff verwendet werden, da auf diese Weise neben dem Polyisobuten ein qualitativ hochwertigeres, praktisch Fluor-freies, Isobuten-armes Raffinat II erhalten wird.

Die aus dem Polymerisationsreaktor ausgetragene Reaktionsmischung enthält noch polymerisierbare Monomere und Katalysator. Daher schreitet in der Regel die Polymerisation auch im Austrag fort. Hierdurch kann sich das im Polymerisationsreaktor gebildete Polymer nachteilig hinsichtlich Molekulargewicht, Molekulargewichtsverteilung und Endgruppengehalt verändern. Um eine weitere Reaktion zu verhindern, wird daher üblicherweise die Polymerisation durch Deaktivierung des Katalysators abgebrochen. Die Deaktivierung kann beispielsweise durch Zugabe von Wasser, Alkoholen, Acetonitril, Ammoniak oder wässrigen Lösungen von Mineralbasen oder durch Einleiten des Austrags in eines der vorgenannten Medien bewirkt werden. Bevorzugt ist die Deaktivierung mit Wasser, die vorzugsweise bei Temperaturen im Bereich von 1 bis 80 °C (Wassertemperatur) durchgeführt wird.

Die Komplex-Katalysatoren können auch aus dem Austrag weitgehend abgetrennt und in die Polymerisationsreaktion zurückgeführt werden. Beim Ruhenlassen des Reaktionsgemisches, z. B. in einem mit langsamer Geschwindigkeit durchströmten Phasentrenngefäß, koaleszieren die feinverteilten Tröpfchen des Katalysators rasch und gehen in eine kohärente Phase über. Die Komplextröpfchen bzw. die kohärente Phase haben eine deutlich höhere Dichte als die Polymerlösung. Sie können daher in der Regel mit Hilfe von Abscheidern, Separatoren oder sonstigen Sammelbehältern von der polymerreichen, katalysatorarmen Produktphase abgetrennt werden.

Mittels eines so genannter Koaleszers, d. h. einer Filtriereinrichtung, die über geeignete Porendurchmesser und/oder hydrophiles Filtermaterial kleine hydrophile Komplextröpfchen in größere Tropfen umwandelt, kann die Bildung einer kohärenten Katalysatorphase verbessert werden. Als hydrophiles Filtermaterial werden häufig Glasfasern, Phenolharze oder Phenolharzbeschichtungen verwendet, aber auch Acrylnitrilfasern oder Beschichtungen sind an dieser Stelle geeignet. Häufig wird diese Koaleszierung durch einen Separator, in diesem Falle einer Hydrophobfiltration, unterstützt. Ein hydrophobes Filtermaterial, gegebenenfalls in Kombination mit engem Porendurchmesser, verhindert den Durchtritt feindisperser Katalysatortöpfchen. Die von der Katalysatorphase abgetrennte polymerreiche Produktphase ist im Allgemeinen homogen und enthält nur noch geringe Mengen löslicher Katalysatoranteile. Diese werden in der zuvor beschriebenen Weise, vorzugsweise mit Wasser, deaktiviert.

Die Summe der Anteile der Moleküle mit $\alpha$- und $\beta$-ständiger Doppelbindung (bezogen auf die Zahl aller olefinisch ungesättigten Makromoleküle in einer Probe) in dem nach dem erfindungsgemäßen Verfahren erhaltenen Polyisobuten beträgt wenigstens 75 Mol-%, vorzugsweise wenigstens 80 Mol-%, am meisten bevorzugt wenigstens 95 Mol%. Der Anteil der Moleküle mit α-ständiger Doppelbindung (bezogen auf die Zahl aller olefinisch ungesättigten Makromoleküle in einer Probe) beträgt vorzugsweise wenigstens 60 Mol-%, besonders bevorzugt wenigstens 75 Mol%. Die Anteile der Moleküle mit α- und β-ständigen Doppelbindung können durch $^1$H-NMR- und/oder $^{13}$C-NMR-Spektroskopie ermittelt werden, wie dem Fachmann geläufig ist.

Das nach dem erfindungsgemäßen Verfahren erhaltene Polyisobuten weist ein zahlenmittleres Molekulargewicht Mn von 200 bis 50000, vorzugsweise 400 bis 5000, insbesondere 550 bis 2800 auf. Die Dispersizität (D = Mw/Mn) beträgt typischerweise weniger als 10, vorzugsweise weniger als 2,2 und insbesondere weniger als 2,0. Polyisobutene mit einem zahlenmittleren Molekulargewicht von weniger als 1500 haben typischerweise eine Dispersizität von weniger als 1,7.

Im erhaltenen Isobutenpolymer beträgt der Fluorgehalt nach Entfernung des Verdünnungsmittels typischerweise weniger als 30 ppm, meist weniger als 15 ppm. In besonders bevorzugten Ausführungsformen liegt der Fluorgehalt zwischen der Nachweisgrenze und 10 ppm. Gewünschtenfalls kann der Fluorgehalt durch Behandlung des Isobutenpolymers mit einem anorganischen Adsorptionsmittel, wie Aluminiumoxid, weiter verringert werden.

Die Erfindung wird durch die folgenden Beispiele näher veranschaulicht.

In den Beispielen werden folgende Abkürzungen verwendet:

IB: Isobuten
R: Raffinat I
$Me_2O$: Dimethylether
$Et_2O$: Diethylether
$i\text{-}Pr_2O$: Diisopropylether
MTBE: Methyl-tert-butylether
MeOH: Methanol
DMF: Dimethylformamid
DMSO: Dimethylsulfoxid
$PhSi(OEt)_3$: Phenyltriethoxysilan

Beispiele 1 bis 11: Diskontinuierliche Polymerisation

Die Umsetzungen wurden in einem 500 ml-Vierhalskolben mit 250 ml-Tropftrichter mit Druckausgleich und aufgesetztem Trockeneiskühler, Thermometer, Septum und Überleitung für Stickstoffgas durchgeführt. Raffinat I der nachstehend angegebenen Zusammensetzung wurde über einen flexiblen Stahlschlauch in eine gekühlte Vorlage, eingeleitet, die Molekularsieb 3Å enthielt, und unter Trockeneiskühlung verflüssigt. Das verflüssigte Raffinat I wurde dann über einen flexiblen Stahlschlauch in den Tropftrichter überführt. Die Volumenabmessung erfolgte mittels der Skalierung des Tropftrichters. Zu dem im Vierhalskolben vorgelegten Raffinat I wurde mittels einer Einwegspritze der Katalysatorkomplex dosiert. Nach der Reaktionszeit brach man die Umsetzung mit Isopropanol ab und verdünnte das Reaktionsgemisch mit 150 ml Hexan. Die Lösung wurde dreimal mit Wasser gewaschen; das Lösungsmittel wurde unter vermindertem Druck entfernt. Im Beispiel 1 wurde an Stelle des Raffinats I eine Lösung von Isobuten in Hexan (50:50 Vol./Vol.) verwendet. Die Ergebnisse sind in Tabelle 1 zusammengefasst.

Beispiele 12 bis 18 und Vergleichsbeispiele 19 und 20: Kontinuierliche Polymerisation

Man verwendete einen Reaktor, der aus einem Stahlrohr von 3 m Länge und einem Innendurchmesser von 6 mm bestand, über den durch eine Zahnradpumpe 100 l/h Reaktorinhalt im Kreis geführt wurden. Rohr und Pumpe hatten ein Volumen von etwa 100 ml. Der Teflonschlauch und der Pumpenkopf waren in einem Kältebad von —25°C (Kryostat) angeordnet. Über eine Kapillare mit 2 mm Innendurchmesser führte man Raffinat I (Beispiele 13 bis 20) bzw. Isobuten/Hexan-Lösung (50:50 Vol./Vol.; Beispiel 12) zu, das auf -25°C vorgekühlt und an Molekularsieb 3 Å auf weniger als 3 ppm Wasser getrocknet worden war. Der Katalysatorkomplex wurde direkt in den Umlauf auf der Saugseite der Umwälzpumpe eingespeist.

Der Reaktionsaustrag wurde unmittelbar nach Verlassen des Umlaufs mit Wasser in einer Mischpumpe gequencht. Nach Abtrennung der Wasserphase leitete man die organische Phase zur Trocknung über Zeolith 3 Å.

In den Vergleichsbeispielen 19 und 20 wurde ein Bortrifluorid umfassender Katalysatorkomplex verwendet.

Die Ergebnisse sind in der Tabelle 2 angegeben.

| Zusammensetzung des Raffinat I | |
|---|---|
| Isobutan | 6 Gew.-% |
| n-Butan | 15 Gew.-% |
| Isobuten | 45 Gew.-% |
| Buten-1 | 23 Gew.-% |
| cis-Buten-2 | 5 Gew.% |
| trans-Buten-2 | 8 Gew.% |
| Butadien | 0,020 Gew.-% |

**Tabelle 1**

| Beispiel | Feed | Katalysator/mmol | IB/ HBF$_4$ [mol/mol] | Zeit [min] | Fluor [ppm] | Mn [g/mol] | Mw/Mn | $\alpha$ [%] |
|---|---|---|---|---|---|---|---|---|
| 1 | IB | HBF$_4$/Me$_2$O 7,5/7,5 | 178 | 180 | 3 | 782 | 1,4 | 73 |
| 2 | R | HBF$_4$/Et$_2$O/MTBE 7,5/7,5/1,36 | 146 | 180 | 3 | 558 | 1,1 | 76 |
| 3 | R | HBF$_4$/Et$_2$O/i-Pr$_2$O 7,5/7,5/7,5 | 146 | 180 | 13 | 1092 | 1,5 | 81 |
| 4 | R | HBF$_4$/Me$_2$O 7,5/7,5 | 178 | 180 | 7 | 720 | 1,2 | 78 |
| 5 | R | HBF$_4$/Me$_2$O/i-Pr$_2$O 11,2/11,2/0,19 | 119 | 90 | 11 | 852 | 1,5 | 52 |
| 6 | R | HBF$_4$/Me$_2$O/MTBE 8,2/8,2/0,23 | 162 | 120 | 5 | 1022 | 1,5 | 69 |
| 7 | R | HBF$_4$/Me$_2$O/Methanol 5,6/5,6/0,59 | 237 | 90 | 2 | 971 | 1,5 | 73 |
| 8 | R | HBF$_4$/Me$_2$O/Wasser 7,5/7,5/0,14 | 178 | 180 | 3 | 522 | 1,1 | 83 |
| 9 | R | HBF$_4$/Me$_2$O/DMF 5,6/5,6/0,26 | 237 | 90 | 4 | 679 | 1,3 | 68 |

| Beispiel | Feed | Katalysator/mmol | IB/ HBF$_4$ [mol/mol] | Zeit [min] | Fluor [ppm] | Mn [g/mol] | Mw/Mn | $\alpha$ [%] |
|---|---|---|---|---|---|---|---|---|
| 10 | R | HBF$_4$/Me$_2$O/DMSO 8,1/8,1/0,28 | 165 | 90 | 10 | 732 | 1,3 | 67 |
| 11 | R | HBF$_4$/Me$_2$O/PhSi(OEt)$_3$ 11,2/11,2/0,83 | 119 | 90 | 6 | 660 | 1,2 | 71 |

**Tabelle 2**

| Beispiel | Feed | Katalysator/mmol | IB/ HBF$_4$ [mol/mol] | Fluor [ppm] | Mn [g/mol] | Mw/Mn | $\alpha$ [%] |
|---|---|---|---|---|---|---|---|
| 12 | IB | HBF$_4$/Me$_2$O 23,3/23,3 | 229 | 4 | 732 | 1,7 | 78 |
| 13 | R | HBF$_4$/Et$_2$O 16,5/16,5 | 153 | 2 | 573 | 1,1 | 79 |
| 14 | R | HBF$_4$/Et$_2$O/MTBE 29,3/29,3/3,1 | 171 | 1 | 582 | 1,1 | 72 |
| 15 | R | HBF$_4$/Me$_2$O/MTBE 22,6/22,6/1,2 | 222 | 3 | 760 | 1,2 | 78 |

| Beispiel | Feed | Katalysator/mmol | IB/ HBF$_4$ [mol/mol] | Fluor [ppm] | Mn [g/mol] | Mw/Mn | $\alpha$ [%] |
|---|---|---|---|---|---|---|---|
| 16 | R | HBF$_4$/Me$_2$O/MTBE 21,2/21,4/0,4 | 238 | 7 | 1297 | 1,7 | 75 |
| 17 | R | HBF$_4$/Me$_2$O/MTBE 26,4/26,4/2,0 | 190 | 44 | 2032 | 2,1 | 80 |
| 18 | R | HBF$_4$/Me$_2$O/MeOH 14,1/14,1/2,0 | 326 | 6 | 938 | 1,6 | 73 |
| 19* | R | BF$_3$/MeOH 13,0/22,7 | | 120 | 1230 | 2,4 | 79 |
| 20* | R | BF3/MeOH 17,0/22,7 | | 79 | 868 | 2,7 | 63 |

* Vergleichsbeispiel

EP 1 598 380 A1

**Patentansprüche**

1.  Verfahren zur Herstellung von im Wesentlichen einfach ethylenisch ungesättigten Isobutenpolymeren, worin die Summe der Anteile der Moleküle mit $\alpha$- und der Moleküle mit $\beta$-ständiger Doppelbindung wenigstens 75 Mol-% beträgt, durch Polymerisation von Isobuten in flüssiger Phase in Gegenwart eines gelösten oder dispergierten Katalysator-Komplexes, der (i) einen Elektronendonor und (ii) eine Verbindung der allgemeinen Formel I umfasst

$$H_a \, Me_b \, [MF_x]_c \qquad\qquad (I)$$

worin

Me für ein Metall der Oxidationsstufe m steht,
M für ein unter den Elementen der Gruppe 2, 3, 4, 5, 10, 11, 13, 14 oder 15 des Periodensystems der Elemente gemäß IUPAC-Notation ausgewähltes Element der Oxidationszahl n steht,
a für eine ganze Zahl $\geq 1$ steht,
b für eine ganze Zahl $\geq 0$ steht,
x für eine ganze Zahl $\geq 2$ steht,
c für $[(a+mb)/(x-n)]$ steht.

2.  Verfahren nach Anspruch 1, wobei das Isobutenpolymer wenigstens 80 Gew.-% von Isobuten abgeleitete Monomereinheiten umfasst.

3.  Verfahren nach Anspruch 1 oder 2, wobei M für ein unter Be, B, Al, Si, P, Ti, V, Ga, Ge, As, Y, Zr, Nb, In, Sn und Sb ausgewähltes Element steht.

4.  Verfahren nach Anspruch 3, wobei $H_a \, Me_b \, [MF_x]_c$ unter $H_2BeF_4$, $HBF_4$, $HPF_6$, $H_2SiF_6$, $HMeSiF_6$, $HAlF_4$, $H_3AlF_6$ ausgewählt ist, worin Me für Li, Na oder K steht.

5.  Verfahren nach einem der vorhergehenden Ansprüche, wobei der Elektronendonor wenigstens ein Stickstoff-, Sauerstoff- und/oder Schwefelatom umfasst.

6.  Verfahren nach Anspruch 5, wobei der Elektronendonor unter Alkoholen, Ketonen, Ethern, Carbonsäuren, Carbonsäureester, Aminen, Nitrilen, Amiden und Sulfoxiden ausgewählt ist.

7.  Verfahren nach Anspruch 5, wobei der Elektronendonor unter Polyvinylakohol, Polyvinylamin, Polyethern, Polyalkylenaminen, Polyalkyleniminen, Polyamiden und Polyketonen ausgewählt ist.

8.  Verfahren nach Anspruch 6, wobei der Elektronendonor einen ersten Donor L[1] und einen zweiten Donor L[2] umfasst und L[1] ein Ether ist und L[2] unter Alkoholen, Carbonsäuren, Carbonsäureestern, Aminen, Nitrilen, Amiden und Sulfoxiden ausgewählt ist.

9.  Verfahren nach Anspruch 6, wobei der Elektronendonor einen ersten Donor L[1] und einen zweiten Donor L[2] umfasst und L[1] ein von einem tertiären Alkylether verschiedener Ether ist und L[2] unter Alkoholen, tertiären Alkylethern, Carbonsäuren, Carbonsäureestern, Aminen, Nitrilen, Amiden und Sulfoxiden ausgewählt ist.

10. Verfahren nach Anspruch 9, wobei L[1] unter Ethern der Formel R-O-R' ausgewählt ist, worin R und R' unabhängig voneinander für Methyl, Ethyl, n-Propyl, i-Propyl, n-Butyl, i-Butyl oder s-Butyl stehen.

11. Verfahren nach Anspruch 10, wobei der Katalysator $HBF_4 \cdot O(CH_3)_2$ umfasst.

12. Verfahren nach einem der vorhergehenden Ansprüche, wobei man als Isobutenquelle einen $C_4$-Kohlenwasserstoffstrom verwendet, der von Isobuten verschiedene Butene enthält.

13. Verfahren nach einem der Ansprüche 1 bis 11, wobei man als Isobutenquelle ein Gemisch von Isobuten mit einem nicht-olefinischen Verdünnungsmittel verwendet.

**Europäisches Patentamt**

**EUROPÄISCHER RECHERCHENBERICHT**

Nummer der Anmeldung

EP 04 01 1971

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 556 932 A (MACH HELMUT ET AL) 17. September 1996 (1996-09-17) * Ansprüche 1-4 * * Beispiele 1,3,8 * ----- | 1,3-6, 12,13 | C08F10/10 C08F4/12 |
| X | GB 401 297 A (IG FARBENINDUSTRIE AG) 3. November 1933 (1933-11-03) * Seite 3, Spalte 1, Zeile 59 - Spalte 2, Zeile 86 * * Beispiel 3 * ----- | 1-6,13 | |
| D,A | EP 0 322 241 A (EXXON CHEMICAL PATENTS INC) 28. Juni 1989 (1989-06-28) * Ansprüche 1,5 * * Seite 9, Zeile 40 - Zeile 51 * ----- | 1 | |

**RECHERCHIERTE SACHGEBIETE (Int.Cl.7)**

C08F

Der vorliegende Recherchenbericht wurde für alle Patentansprüche erstellt

| Recherchenort | Abschlußdatum der Recherche | Prüfer |
|---|---|---|
| Den Haag | 11. Oktober 2004 | Fischer, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 01 1971

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2004

| Im Recherchenbericht angeführtes Patentdokument | Datum der Veröffentlichung | Mitglied(er) der Patentfamilie | | Datum der Veröffentlichung |
|---|---|---|---|---|
| US 5556932 A | 17-09-1996 | DE | 4306384 A1 | 08-09-1994 |
| | | AT | 173747 T | 15-12-1998 |
| | | DE | 59407344 D1 | 07-01-1999 |
| | | WO | 9420554 A1 | 15-09-1994 |
| | | EP | 0687276 A1 | 20-12-1995 |
| | | ES | 2123769 T3 | 16-01-1999 |
| | | JP | 8507559 T | 13-08-1996 |
| GB 401297 A | 03-11-1933 | KEINE | | |
| EP 0322241 A | 28-06-1989 | US | 4849572 A | 18-07-1989 |
| | | AR | 246280 A1 | 29-07-1994 |
| | | AT | 113618 T | 15-11-1994 |
| | | BR | 8806789 A | 29-08-1989 |
| | | CA | 1290093 C | 01-10-1991 |
| | | DE | 3843631 A1 | 06-07-1989 |
| | | DE | 3852011 D1 | 08-12-1994 |
| | | DE | 3852011 T2 | 09-03-1995 |
| | | EP | 0322241 A2 | 28-06-1989 |
| | | FR | 2624865 A1 | 23-06-1989 |
| | | GB | 2211854 A ,B | 12-07-1989 |
| | | JP | 1259011 A | 16-10-1989 |
| | | JP | 2807887 B2 | 08-10-1998 |
| | | KR | 140716 B1 | 01-07-1998 |

EPO FORM P0461

Für nähere Einzelheiten zu diesem Anhang : siehe Amtsblatt des Europäischen Patentamts, Nr.12/82